# EUROPEAN PATENT APPLICATION

(11) **EP 1 293 927 A2**
(43) Date of publication of application: **19.03.2003**
(21) Application number: 02019076.5
(22) Date of filing: 28.08.2002
(51) Int. Cl.: G06K 9/00

(54) **Image comparison device, image comparison method, and computer readable medium storing program to execute image comparison with computer**

(30) Priority: 29.08.2001 JP 2001260363
(71) Applicant: Olympus Optical Co., Ltd., Tokyo (JP)
(72) Inventor: Morishima, Masahiro, 2-3, Kuboyama-cho, Hachioji-shi, Tokyo (JP); Aoshima, Ryoji, 2-3, Kuboyama-cho, Hachioji-shi, Tokyo (JP)
(74) Representative: von Hellfeld, Axel, Dr. Dipl.-Phys.

(57) **Abstract**

An image comparison device comprises a macro observation unit which takes a macro observed image of a sample, a micro observation unit which takes a micro observed image of the sample, a stage which moves the sample between the macro observation unit and the micro observation unit, a camera which photographs an observed image of the sample on the stage taken from the macro observation unit and the micro observation unit, a optical path switching part configured to change an optical path to the camera from the macro observation unit or the micro observation unit, an electric zoom magnification adjustment part configured to adjust a zoom magnification of the observed image of the sample with the macro observation unit and the micro observation unit, an electric parfocal adjustment part configured to adjust a parfocal of the observed image of the sample with the macro observation unit and the micro observation unit, a record medium which records the observed image photographed with the camera as a reference image, a display part configured to display the observed image photographed by the camera as a comparison image, and a control part configured to enable an operation of at least adjustment of a zoom magnification adjustment of the observed image and the parfocal on the display part, and to display the comparison image photographed with the camera and the reference image recorded in the record medium on the display part with enabling the comparison.

## Description

The present invention relates to an image comparison device and an image comparison method for performing image comparison with comparison images to be compared using a reference image used as a sample and a computer readable medium which stores a program to execute image comparison with a computer.

Recently, a lot of events of a counterfeit of the print thing, a special print of an ID card etc., and counterfeit of the processing, etc. occur. And, it is difficult to recognize it because the counterfeit method becomes cleverly. In addition, the print and the processing to prevent the counterfeit also becomes precise so that a man hardly confirms it visually.

An image comparison device which performs the comparison observation is considered by using the reference image memorized as a digital image as indicated in Japanese Patent Application KOKAI Publication No. 6-6807. This image comparison device is configured as follows. Two or more images taken from the television camera are memorized as the digital data. A half image of the reference image and a half image of the comparison image are taken out among the digital data, each of them is combined together and is displayed as one image on the monitor. As a result, the comparison judgment whether the right and left image are agreed or not can be easily confirmed.

However, in the technology disclosed in Japanese Patent Application KOKAI Publication No. 6-6807, the recorded digital image is read and the corresponding digital images are compared on the television monitor. But, the comparison is performed by arranging the static images, which have already been taken, at right and left. Therefore, it is difficult to coincide the condition of the part to want to compare the reference image and the comparison image. For instance, though it is preferable to make the size of these images and conditions the same when photographing in the comparison between the reference image and the comparison image, the comparison observation of an accurate image might become difficult since the photographing condition in the reference image is various when performing the comparison by using the image file in which a picture was taken in the past.

An image comparison device according to the present invention characterized by/comprising: a macro observation unit which takes a macro observed image of a sample; a micro observation unit which takes a micro observed image of the sample; a stage which moves the sample between the macro observation unit and the micro observation unit; a camera which photographs an observed image of the sample on the stage taken from the macro observation unit and the micro observation unit; a optical path switching part configured to change an optical path to the camera from the macro observation unit or the micro observation unit; an electric zoom magnification adjustment part configured to adjust a zoom magnification of the observed image or the sample with the macro observation unit and the micro observation unit; an electric parfocal adjustment part configured to adjust a parfocal of the observed image of the sample with the macro observation unit and the micro observation unit; a record medium which records the observed image photographed with the camera as a reference image; a display part configured to display the observed image photographed by the camera as a comparison image; and a control part configured to enable an operation of at least adjustment of a zoom magnification adjustment of the observed image and the parfocal on the display part, and to display the comparison image photographed with the camera and the reference image recorded in the record medium on the display part with enabling the comparison.

The present invention may be an invention of a method and also be an invention of a record medium having an above mentioned function.

The operation of the zoom and the focusing of the observed image with micro observation unit and the macro observation unit is motorized according to the present invention. As a result, these operations can be performed in the lump on the operation screen of the display means, and in addition the setting work by the comparison observation etc. can be performed efficiently easily without touching the main body of the microscope side.

The observed condition is stored when storing the image as a reference image according to the present invention. Therefore, if these information are stored in the storage medium and are usable, any system can automatically reproduce the same observed condition as the time compared by the reference image used in the past.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of the microscope image comparison device according to the embodiment of the present invention;
FIG. 2 is a figure which shows the system configuration of the microscope image comparison device according to the embodiment;
FIG. 3 is a figure which shows a display example of the monitor used for embodiment;
FIG. 4 is a flowchart to explain an operation of the embodiment;
FIG. 5 is a flowchart to explain an operation of the embodiment; and
FIG. 6 is a flowchart to explain an operation of the embodiment.

Hereinafter, an embodiment of the present invention will be explained referring to the drawings.

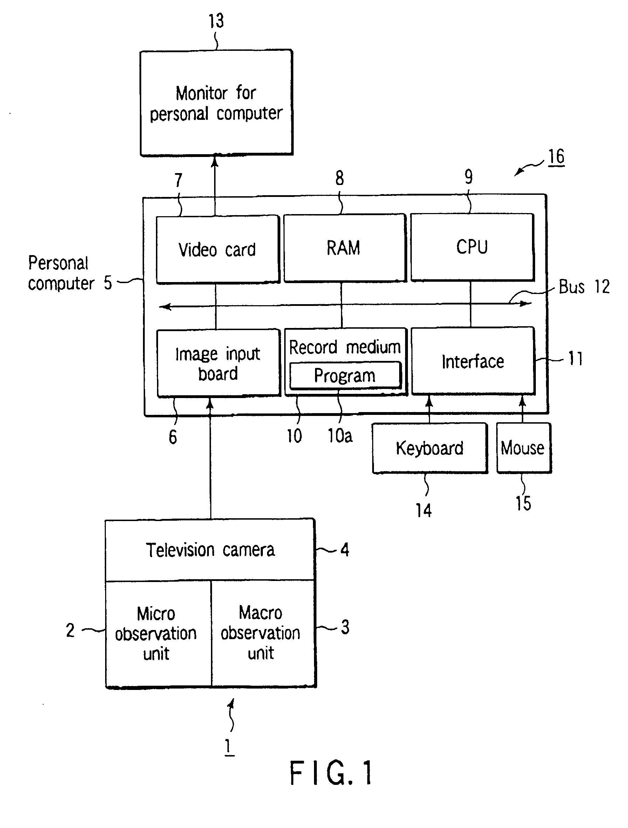

FIG. 1 is a figure which shows the block diagram of the microscope image comparison device as the image comparison device to which the present invention is applied.

In FIG. 1, an observation device 1 which observes the sample not shown in the figure has a micro observation unit 2 and a macro observation unit 3. The micro observation unit 2 takes the microscope observed image as the micro observed image taking means to take the micro observed image of the sample. The macro observation unit 3 takes the microscope observed image as the macro observed image taking means to take the macro observed image of the sample. In addition, the observation device 1 has a television camera 4 as a photographing means. The observation device 1 sends the micro observed image or the macro observed image taken respectively with the micro observation unit 2 or the macro observation unit 3 as a digital image for the personal computer 5 which configures a part of the controller 16 through the television camera 4.

The personal computer 5 has an image input board 6, a video card 7, a RAM 8, a CPU 9, a record medium 10, an interface 11, and a bus 12. The personal computer 5 takes a digital image from the television camera 4 into the image input board 6. The taken digital image is memorized in the RAM 8, and is displayed on the monitor 13 for the personal computer as the display means as a static image or a moving image through the video card 7 (As for the moving image, the moving image of a video rate of the television camera 4 is projected). The digitalized two or more reference images prepared beforehand and the programs 10a of image comparison set of software, etc. are recorded on the record medium 10. The program 10a is given from the external device through the bus 12, and is recorded on the RAM 8 once. The CPU 9 executes the program 10a and performs the comparison processing of the image. The keyboard 14 and the mouse 15, which input the instruction when the program 10a is executed, are connected with the interface 11.

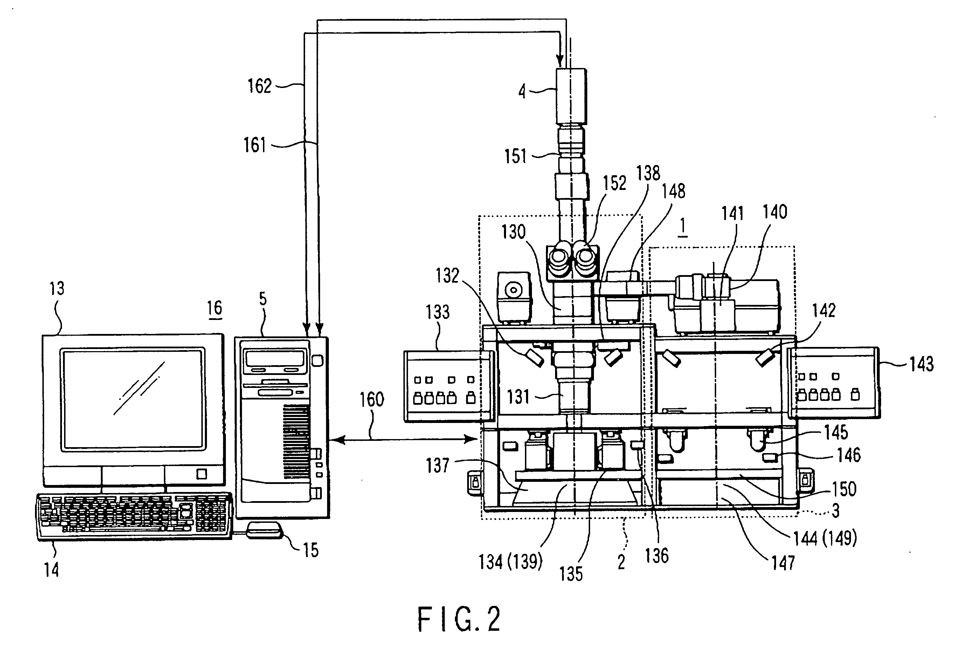

FIG. 2 is a figure which shows the system configuration of the microscope image comparison device as mentioned above, and the same reference symbols are fixed to the same parts as those of FIG. 1.

In this case, the micro observation unit 2 and the macro observation unit 3 are integrated in the observation device 1 according to the system. The micro observation unit 2 and the macro observation unit 3 have a common macro/micro electric stage 150 (automatic operation X-Y stage) provided on each of a base 137 (for micro) and a base 147 (for macro). By driving the macro/micro electric stage 150, the sample can be automatically handed over between the micro observation unit 2 and the macro observation unit 3.

To photograph each observed image in the micro observation unit 2 and the macro observation unit 3, the television camera 4 is provided.

In a case of photographing the micro observed image with the television camera 4, the sample is photographed through the micro/macro zoom handle 151 and the objective 131 at the micro observation unit 2 side.

The adjustment of focus here is performed by the micro electric focusing zoom 138.

In a case of photographing the macro observed image with the television camera 4, the sample is photographed through the micro/macro zoom handle 151 and the electric zoom 141 for macro at macro observation unit 3 side.

The adjustment of focus here is performed by the macro electric focusing 148.

In this case, the zoom magnification of the observed image of the sample by the macro electric zoom 141 can be changed to the magnification with at least two steps according to the size of the sample. The zoom magnification adjustment and the parfocal adjustment of the observed image by the micro electric focusing zoom 138 of the micro observation unit 2, the macro electric zoom 141 observation unit 3, and the macro electric focusing 148 can be performed on the operation screen of the monitor 13 for the personal computer on the personal computer 5. The intensity adjustment device not shown in the figure, the optical path switching device not shown in the figure, and the television camera 4 can be controlled automatically by the personal computer 5.

The micro observation unit 2 and the macro observation unit 3 have various illumination devices. For instance, the micro observation unit 2 comprises a polarized illumination 130, an incident illumination 132, an incident fluorescence illumination 135, a focal illumination 136, a transmitted illumination 134, and an infrared transmitted illumination 139. The macro observation unit 3 has a polarized illumination 140, an incident illumination 142, an incident fluorescence illumination 145, a focal illumination 146, a transmitted illumination 144, and an infrared transmitted illumination 149. In these various illumination devices, a suitable illumination method for the observation part of the sample which becomes an object can be selected by one of the personal computer 5, the control box 133 (manual operation box) for micro, and the control box 143 (manual operation box) for macro.

The observed image obtained from the micro observation unit 2 and the macro observation unit 3 in such the observation device 1 can be observed directly with an eyepiece 152.

The controller 16 is connected with the observation device 1 through the communication means. The controller 16 has a personal computer 5, a monitor 13 for the personal computer which displays' a GUI for the display and the control of the observed image etc., a keyboard 14 and a mouse 15, etc. as the input device.

The controller 16 controls the observation device 1 through the macro/micro communication cable 160. The image signal from the television camera 4 is input to the controller 16 through the television camera video cable 162. The controller 16 can control the brightness and the contrast etc. of the television camera 4 by the television camera communication cable 161.

The controller 16 has a personal computer 5, a memory not shown in the figure, an image reader, and a monitor 13 for the personal computer. The image reader takes the image signal from the television camera 4 into the image input board 6 of the personal computer 5 described in FIG. 1. The taken digital image is memorized temporarily on the RAM 8, arid is displayed on the monitor 13 for the personal computer as a digital image through the video card 7. The personal computer 5 has the menu for the system control, the button operation function, and the communication function to control the observation device 1 besides the frame memory function to display the taken digital image. In addition, the monitor 13 for the personal computer to display the system menu and the button to control and to display the taken image, the keyboard 14 to operate the menu and the button, and the mouse 15 are connected with the personal computer 5.

The personal computer 5 stores the data of taken image and photographing condition, etc. in other personal computers and comprises a communication means necessary to share the data. One example of method of sharing the data is as follows. The host computer which stores the data of taken image and photographing condition, etc. is set up. Two or more personal computers, which have an equal function to the above-mentioned personal computer as the host computer, are connected by the communication means which is provided thereto respectively. As a result, the plurality of image comparison devices are concentratedly stored to the host computer through the communication means even if they are set up respectively in a place away. And, sharing can be achieved by reading the concentratedly stored data to the image comparison device set up in a place away, respectively.

The method of another data sharing is as follows. The host computer which is the above-mentioned is not set up, and the data of taken image and photographing condition, etc. is stored with each personal computer. And, two or more image comparison devices are connected through the communication means that is provided to each personal computer. As a result, even if the plurality of image comparison devices, by enabling to write the data which wants to be delivered through the communication means to the personal computer which wants to store the data, the sharing of the data can be achieved between two or more personal computers.

For instance, there are an Ethernet (registered trademark), a GP-IB, a parallel interface, and a serial interface, etc. as a communication means.

The observation devices, which can be automatically controlled, such as movement of the stage, the focus, the zoom, the optical path switching, switching the illumination method, intensity adjustment, and television cameras which can be controlled automatically are connected with personal computer 5 through the interface. The interface is built into the observation device 1 and the personal computer 5, and is, for instance, an RS-232C, a GP-IB, a parallel interface, a serial interface, and a SCSI interface, etc.

Next, the operation of the embodiment configured like this will be explained.

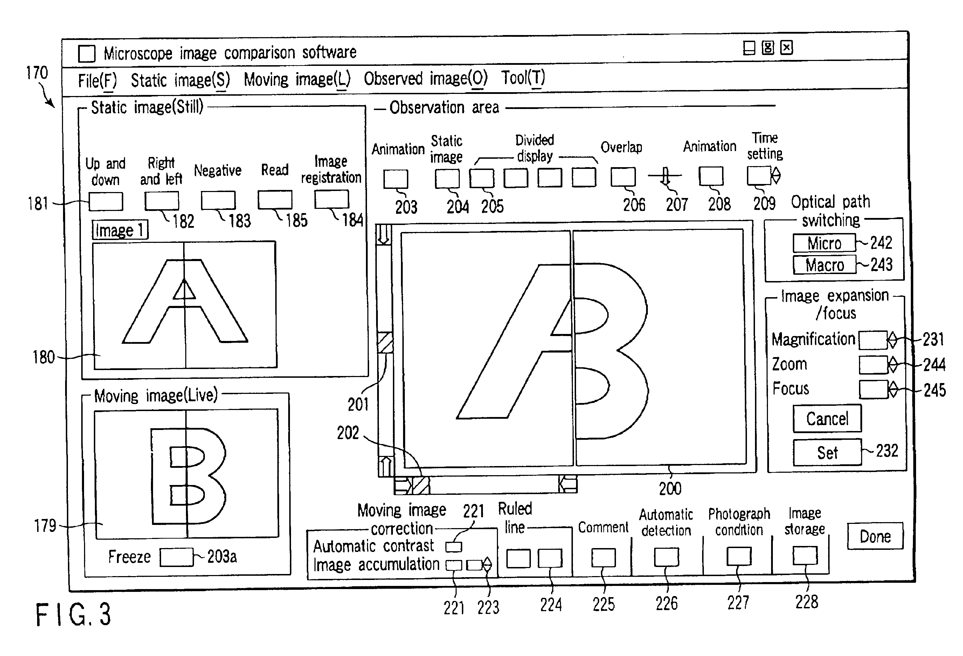

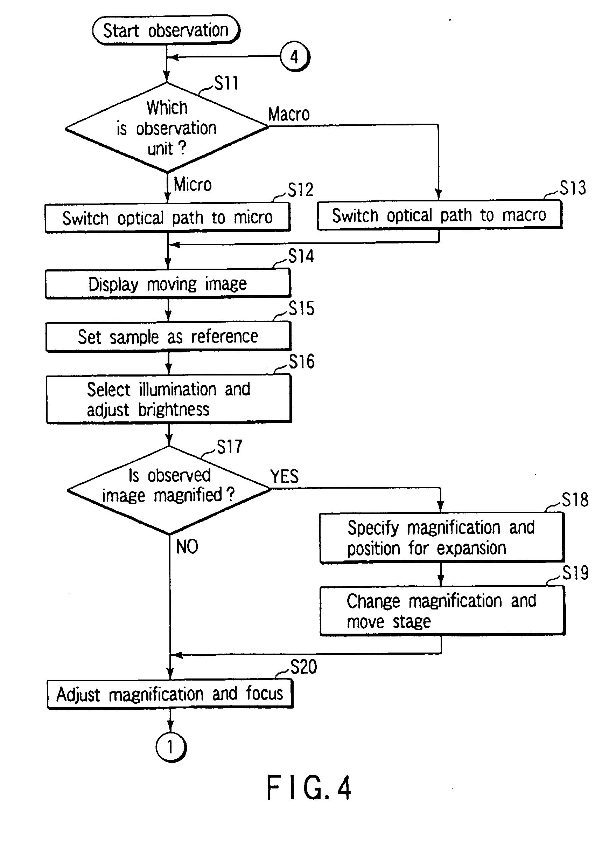

FIG. 3 is an example of the display in the monitor 13 for the personal computer. FIG. 4 to FIG. 6 are flowcharts to explain the work procedure and the operation by the observer in general.

First of all, the reference image used as a standard image when images are compared is acquired and registered (steps S11 to S23 described later). The observer selects the observation unit of the observation device 1 in step S11 shown in FIG. 4. In a word, the observer selects the macro observation unit 3 or the micro observation unit 2 according to the size etc. of the area on the sample which wants to be observed. In this case, the macro button 243 or the micro button 242 corresponding to the macro observation unit 3 and the micro observation unit 2 is clicked by the mouse 15 on the operation screen 170 of the monitor shown in FIG. 3 and the desired observation unit is selected by performing the optical path switching in the observation device 1 (step S12 and S13). Next, the moving image button 203 is selected on the operation screen 170 of the monitor, and the moving image which is taken with the television camera 4 is displayed on the observed image display area 200 (step S14).

In this case, if the frieze button 203a is selected, the image photographed by television camera 4 can be displayed on observed image display area 200 as a static image. Moreover, when the static image button 204 is selected, the static image of the photographed image in the television camera 4 is displayed on the observed image display area 200 at once.

Next, the observer sets the sample used as a sample to create the reference image on the macro/micro electric stage 150 on the selected observation unit side (step S15). Here, when the entire sample is observed in the macro observation, the magnification change button 231 is operated to become a magnification to be able to observe the entire sample.

And, by selecting a suitable illumination method for the sample with reference to the moving image (observed image) displayed on the observed image display area 200 by using the macro control box 143, the illumination method and brightness are adjusted (step S16).

Next, the observer judges whether the detail of the observed image is magnified and observed (step S17). And, when magnifying the image (YES), the observer sets the expansion magnification by clicking the magnification change button 231 furthermore, and takes the pointer of the mouse 15 on the observed image. Then, the pointer displays the taking area of the magnification specified on the observed image. And, the observer clicks set button 232 of the operation screen 170 deciding the expansion position by clicking the position which wants to be taken (step S18). Then, the personal computer 5 calculates a center position of the magnified image from a current stage position, a set magnification, and the position of the mouse pointer on the observed image, and moves the macro/micro electric stage 150 automatically to agree a center position of the magnified image on an optical axis of the observation unit which has been selected. As a result, the position which is wanted to be observed the sample is set (step S19).

Next, the observer adjusts the zoom magnification by clicking the zoom button 244 so that the area to be observed in the sample is displayed and subsequently adjusts the focus clicking focus button 245 (S20).

The proceeding advances to step S20 at once when judging that the detail of the observed image is not magnified and observed in step S17. The observer adjusts the zoom magnification so that the area to be observed in the sample is displayed, and adjusts the focus.

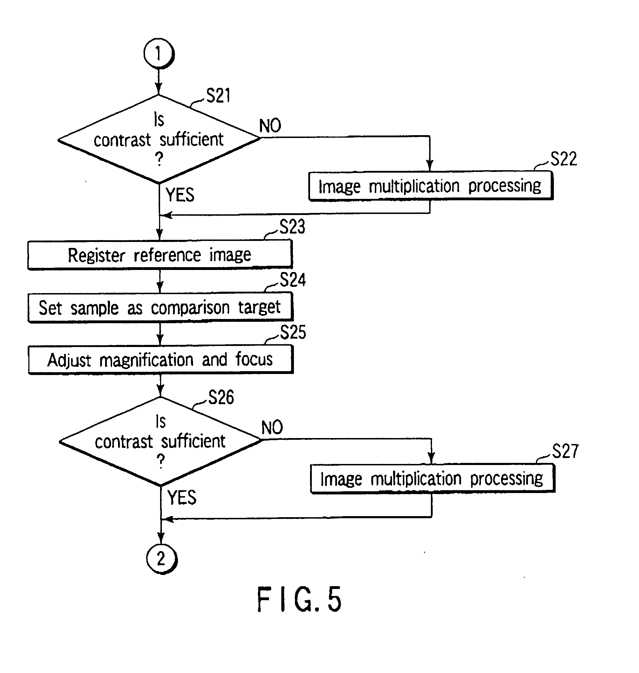

Next, the observer judges whether the contrast of the observed image is enough or not in FIG. 5 (step S21). Here, since a clear reference image cannot be generated when the contrast of a fluorescent illumination or the sample is small, image comparison with high accuracy cannot be performed. In this case, the image accumulation processing is performed (step S22).

In this case, when the observer selects the automatic contrast button 221 on the operation screen 170 of the monitor, the automatic contrast processing is performed. As a result, the personal computer 5 puts the gain or the offset on the taken image so that the brightness level may become optimal. And, after the image data is changed, the image is displayed on the observed image display area 200. The observer adjusts the observed position of the sample, the magnification, and the focus while seeing the observed image. Next, the observer selects the accumulation button 222 on the operation screen 170 of the monitor, and starts the image accumulation processing. As a result, the personal computer 5 stores the set number of the taken images, add the image data and redisplays it on the observed image display area 200. The observer adjusts the accumulation frequency in the number 223 of accumulation on the operation screen 170 of the monitor according to the brightness of the sample, and adjusts to the image observed easily.

The displayed image is registered as the reference image by operating the image registration button 184 on operation screen 170 of the monitor when these preparations are completed (step S23). In this case, the personal computer 5 takes the image signal from television camera 4 in a digital image through the image input board 6, and memorizes it on the record medium 10 as the reference image. In addition, the personal computer 5 displays the reference image in the static image display area 180. Moreover, the personal computer 5 confirms this photographing condition according to the communication between the observation device 1 and the television camera 4, and records the photographing concerned condition in the photographing condition file in the personal computer 5 etc. This communication is performed through the macro/micro communication cable 160 and the television camera communication cable 161.

The registration of the reference image may be performed by selecting the file reading button 185 on the operation screen 170 of the monitor, for instance, reading the data of the reference image stored on the personal computer 5 or on the record medium of other personal computers by the communication means of the network, etc. In this case, the procedure of steps S11 to S22 becomes unnecessary.

Next, acquisition of the observed image of the sample to perform comparison and the comparison work with the reference image are performed (the following steps S24 to S42). The observer sets the sample for the comparison to create the comparison image on the macro/micro electric stage 150 (step S24). And, the photographing condition button 227 is selected. Then, personal computer 5 reads the photographing condition file when the reference image is registered, and transmits information such as the position of the macro/micro electric stage 150, the zoom magnification, the illumination method, the intensity adjustment, the optical path changes, and setting television camera 4 to the observation device 1 through the macro micro communication cable 160. The observation device 1 makes the observed condition coincide to the condition when the reference image is acquired by automatic control by the information. And, the moving image of the observed image photographed by the television camera 4 is displayed on the observed image display area 200.

The difference of color etc, of the image is generated by the machine difference of the observation device 1 with the degradation of the lamp of the illumination device and the lens, etc. even if photographing condition is the same when the photographing. Then, the personal computer 5 adjusts the color of the image input board as the reference image is corresponding to the color reproduction of the comparison image. For instance, the color of the image input board is adjusted so that brightness information of red, green, blue as the characteristic of the reference image and the color information on backing is matched with the comparison image.

Next, the observer confirms whether the area to be observed in the sample in the observed image display area 200 is displayed or not. Here, the observer adjusts the zoom magnification by clicking the zoom button 244 with the mouse 15, and subsequently adjusts the focus by clicking the focus button 245 with the mouse 15 (step S25).

Here, the observer judges whether the contrast of the image enough or not (step S26). In this case, if the contrast of a fluorescent illumination is small, images cannot be compared since it becomes no clear image even if observation is performed it as it is. In this case, the image accumulation is performed (step S27).

In this case, the observer first selects the automatic contrast button 221 on the operation screen 170 of the monitor and processes an automatic contrast. As a result, after image data is changed by putting the gain or the offset to become a brightness level to observe the taken image easily, the personal computer 5 displays it on the observed image display area 200. The observer adjusts the position where the sample is observed, the magnification, and focus while seeing this observed image. Next, the observer selects the accumulation button 222 on operation screen 170 of the monitor and starts the image accumulation processing. As a result, personal computer 5 stores the set number of the taken images, and adds and redisplays the image data on the observed image display area 200. The observer adjusts the accumulation frequency by the brightness of the sample in number 223 of accumulation on operation screen 170 of the monitor, and adjusts to observe the image easily.

As a result, the reference image is corresponding to the photographing condition in the comparison image, and it is possible to photograph the image with a comparative image. Thereafter, work to compare images starts.

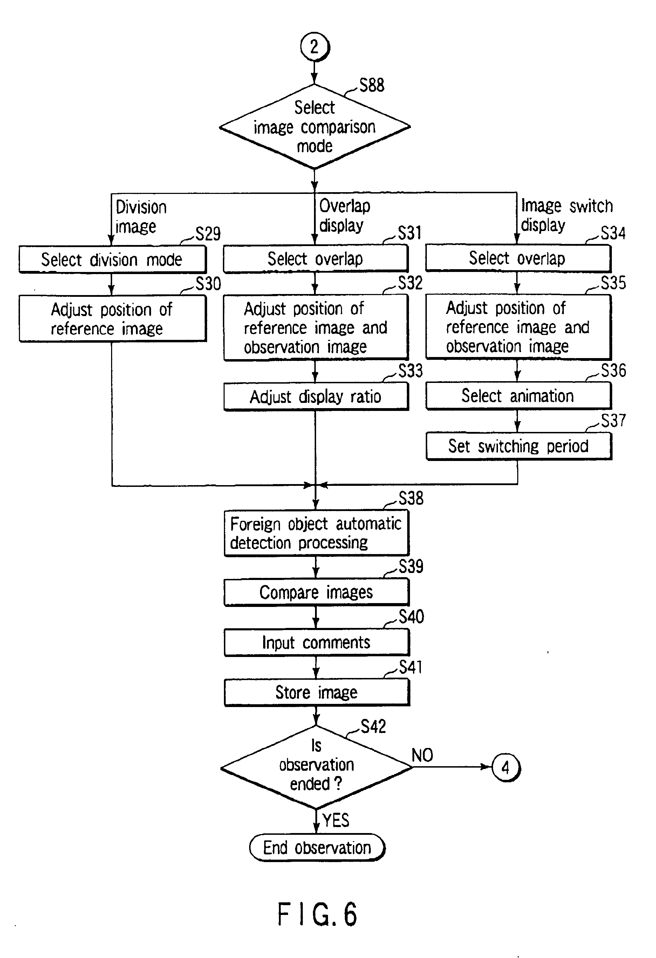

In this case, the observer selects more suitable mode for the sample than either the division image display, the overlap display or the image switching display as an image comparison mode in FIG. 6 (step S28). Moreover, the image from the television camera 4 is displayed on the moving image display area 179 as a comparison image by selecting the image comparison mode.

First of all, the observed image display area 200 is divided into two areas which are upper and lower or right and left at the division image display as the comparison of the first image mode. And, the reference image which consists of the static image in the other division area is displayed. The comparison image which consists of the moving image or the static image in the other division area is displayed. Moreover, the method of displaying the division image display is selected by selecting this division mode (step S29). The display method of division image display has left: reference image and right: comparison image, upper: reference image and lower: comparison image, and upper: comparison image and lower: reference image. These can be selected with button 205. The ruled line of the borderline where the area is divided can be moved with ruled line movement button 224.

The observer selects the method of displaying a division image display suitable by the areas which want to be the comparison in the sample it. In this case, the vertical scrollbar 201 and the horizontal scrollbar 202 are arranged in the reference image displayed on a division area (right side shown in figure) of one of the observed image display area 200. The observer adjusts the position where the reference image is displayed by moving these scrollbars (step S30). The personal computer 5 adjusts the amount of the movement of the scrollbar, and moves the macro/micro electric stage 150 automatically so that a position where the position of the display of the image of the reference image and a position of the display of the image of the comparison image is in the same position. Moreover, the comparison image displayed on the other division area (left side shown in figure) in the observed image display area 200 is displayed by the moving image. To minute adjust the position of the comparison image if necessary, the observer adjusts the position where the comparison image is displayed to move macro/micro electric stage 150 while confirming the image.

Next, as a comparison of the second image mode at the overlap display, the ratio of the brightness of the reference image and the comparison image is set in arbitrary integer n and m (where, n ≧ m), and the m/n times image and (n-m)/n times image are added and are displayed on the observed image display area 200. As a result, the seen image can be observed by transparent of the reference image and the comparison image. Integers n and m are changed and the brightness of the reference image and the comparison image changes gradually and comparatively. It is possible to display by emphasizing the image in one side.

In this case, the observer selects the overlap button 206 (step S31), and adjusts the positions of the reference image and the comparison image (step S32). Thus, slight deviation of the reference image and the comparison image is matched by moving macro/micro electric stage 150 while confirming the observed image. The observer observes the overlap image, and confirms a part not corresponding. In the adjustment of the display ratio (step S33), when the observer want emphasize either image, it is possible to display by emphasizing the display ratio of either image by changing the adjustment bar 207 of the display ratio.

Next, two images of the reference image and the comparison image are changed constant intervals alternately repeatedly in the observed image display area 200 and displayed as a comparison of the third image mode at the image switching display (animation). The observer matches slight deviation of the reference image and the comparison image beforehand by selecting the overlap button 206 (step S34), and adjusting the position of the reference image and the comparison image (step S35). Next, the image switching display button 208 is selected (step S36), and a part not corresponding is confirmed while confirming the changing image. In a word, the different part of the reference image and the comparison image is recognized according to the effect of the afterimage of the image of the change of the image alternately. In this case, the observer changes the change time with the set time button 209 and sets the comparative cutting change time (step S37).

To change the method of displaying the reference image, an upper and lower button 181, a right and left button 182, and a negative button 183 are provided. The upper and lower button 181 and the right and left button 182 are buttons which can reverse the reference image right and left with an upper and lower reversing, for instance, when comparing states of both sides of the sample, so that the photographed image from the other side may be matched in the direction of the image on the table side. The negative button 183 is a button to make the comparison of images easy to recognize the image in one side with the sample by reversing positive to negative.

The foreign body automatic operation detection button 226 is selected when the image comparison is completed. Then, the binary images of the reference image and the comparison image are compared by the personal computer 5 by the foreign body automatic operation detection processing (step S38). In this case, the image comparison by the observer is supported by a different part's being dyed or being shown by the mark etc. And, the observer visually compares images referring to the foreign body automatic operation detection processing (step S39).

Next, when the comment button 225 is selected, the comment input becomes possible by the drawing function in the observed image by the image comparison mode (step S40). As a result, the supplementation explanation can be added and written. Moreover, when the observer displays the image necessary to store on the observed image display area 200, and selects the image storing button 228, the image is stored in the storage medium which wants to be stored (step S41). The personal computer 5 also stores the observed condition in the storing image at this time.

Next, the observer judges whether the observed part of the sample is changed in addition and a detailed comparison observation is continued or not (step S42). Here, when the comparison observation is continued, proceeding returns to the first step S11, and the operation mentioned above is repeated. When the comparison observation is not continued, the observation is ended.

Therefore, the micro electric focusing zoom 138 is provided to the micro observation unit 2, and the macro electric zoom 141 and the macro electric focusing 148 are provided to the macro observation unit 3, respectively. And, the operation of the zoom and focusing of the observed image for the micro observation units 2 and the macro observation units 3 are motorized. These operations can be performed in the lump only by clicking the zoom button 244 or the focus button 245 on the operation screen 170 of the monitor with the mouse etc. Therefore, setting work at the comparison observation can be efficiently and easily performed without touching the microscope comparing with performing the zoom and the focusing by directly operating the macro observation unit and the micro observation unit.

Moreover, the observed condition when storing it as the reference image is stored with image data. Therefore, if the information are stored in the storage medium and use thereof is enabled, any system can automatically reproduce the same observed condition at the time compared by the reference image used in the past. Therefore, the accuracy of the comparison observation is improved, and the work efficiency can be improved greatly.

In addition, when a whole of the sample image is observed by the macro observation, the size of several samples is stored by the zoom magnification which can be displayed as a whole image beforehand. Thereby, the magnification registered with the observed sample is selected.

As a result, it is possible to observe the image by the same magnification as a past observation magnification.

In addition, either of the division image display, the overlap display or the image switching display mode suitable for the sample can be selected as the image comparison mode. Therefore, the comparison observation of the reference image and the comparison image becomes easy, and the difference point of the image can be found easily.

The flowchart mentioned above only chiefly described the work procedure by the observer. A series of the particular work procedure may be set, and the program which confirms the work by the observer along the work procedure may be created. Even if the observer is a beginner, the image comparison device can be operated according to the procedure along the flow by the programming as mentioned above.

Moreover, the present invention need not be executed according to the procedure along the flowchart mentioned above. In a case of being necessary or unnecessary to execute or the observer is skill person, etc., the work according to the observation and work to replace the procedure may be performed.

As described above, according to the present invention, the image comparison device, which can perform the comparison observation of the reference image and the comparison image with high accuracy and easy operation, can be provided.

## Claims

1. An image comparison device **characterized by** comprising:
a macro observation unit which takes a macro observed image of a sample;
a micro observation unit which takes a micro observed image of the sample;
a stage which moves the sample between the macro observation unit and the micro observation unit;
a camera which photographs an observed image of the sample on the stage taken from the macro observation unit and the micro observation unit;
a optical path switching part configured to change an optical path to the camera from the macro observation unit or the micro observation unit;
an electric zoom magnification adjustment part configured to adjust a zoom magnification of the observed image of the sample with the macro observation unit and the micro observation unit;
an electric parfocal adjustment part configured to adjust a parfocal of the observed image of the sample with the macro observation unit and the micro observation unit;
a record medium which records the observed image photographed with the camera as a reference image;
a display part configured to display the observed image photographed by the camera as a comparison image; and
a control part configured to enable an operation of at least adjustment of a zoom magnification adjustment of the observed image and the parfocal on the display part, and to display the comparison image photographed with the camera and the reference image recorded in the record medium on the display part with enabling the comparison.

2. The image comparison device according to claim 1, **characterized in that**
the zoom magnification adjustment part configured to adjust the zoom magnification of the observed image of the sample with the macro observation unit can change a magnification of at least two stages according to a size of the sample.

3. An image comparison method which is applied to an image comparison device according to claim 1 or claim 2, **characterized by** comprising:
taking an observed image by a macro observation unit which takes a macro observed image of a sample or a micro observation unit which takes a micro observed image of the sample;
storing an observation condition at taking the observed image;
photographing the observed image as a reference image; and
photographing a comparison image of a sample as a same condition as the reference image.

4. The image comparison method according to claim 3, **characterized in that** the method is applied to a system in which at least two image comparison devices and at least one image server are connected through a network, and
when the image comparison is performed in one of the at least two image comparison devices, the reference image and the photographing condition which are used for comparison with the comparison image acquired from the sample are read from the server through the network.

5. A computer readable medium which stores a computer executable program to execute an image comparison with an image comparison device according to claim 1 or claim 2, **characterized by** comprising:
means for taking an observed image by a macro observation unit which takes a macro observed image of a sample or a micro observation unit which takes a micro observed image of the sample;
means for storing an observation condition at taking the observed image;
means for photographing the observed image as a reference image; and
means for photographing a comparison image of a sample as a same condition as the reference image.

6. The computer readable medium according to claim 5, **characterized in that** the program is applied to a system in which at least two image comparison devices and at least one image server are connected through a network, and
when the image comparison is performed in one of the at least two image comparison devices, the reference image and the photographing condition which are used for comparison with the comparison image acquired from the sample are read from the server through the network.
